# EUROPEAN PATENT APPLICATION

(11) **EP 4 765 418 A1**
(43) Date of publication of application: **24.06.2026**
(21) Application number: 24901141.2
(22) Date of filing: 06.12.2024
(51) Int. Cl.: H01M 50/367, H01M 50/224, H01M 50/242, H01M 10/613, H01M 10/6551, H01M 50/213, H01M 50/317, H01M 50/258, H01M 50/249, B60L 50/64

(54) **BATTERY PACK, BATTERY ASSEMBLY, AND VEHICLE INCLUDING SAME**

(30) Priority: 07.12.2023 KR 20230176929; 14.05.2024 KR 20240063450
(71) Applicant: LG Energy Solution, Ltd., Seoul 07335 (KR)
(72) Inventor: JEONG, Han Yong, Daejeon 34122 (KR); HUR, Jae Yong, Daejeon 34122 (KR); LEE, Young Kyu, Daejeon 34122 (KR)
(74) Representative: Goddar, Heinz J.
(86) International application number: PCT/KR2024/019992
(87) International publication number: WO 2025/121955

(57) **Abstract**

A battery pack according to the present invention includes: a battery module; a middle case that is configured to accommodate the battery module and includes a top plate, a bottom plate spaced apart from the top plate so that a battery accommodation space is formed between the bottom plate and the top plate, and a middle wall that connects the top plate with the bottom plate so as to partition the battery accommodation space; and a side case coupled to the top plate and the bottom plate outside the battery accommodation space to cover the side of the battery accommodation space. The middle wall is spaced apart from the battery module to form a flow path through which a fluid may move when the fluid is vented from the battery module.

## Description

### TECHNICAL FIELD

### CROSS-REFERENCE TO RELATED APPLICATIONS

The present application claims priority to Korean Patent Application No. 10-2023-0176929 filed on December 7, 2023 and Korean Patent Application No. 10-2024-0063450 filed on May 14, 2024 in the Republic of Korea, the disclosures of which are incorporated herein by reference.

### TECHNICAL FIELD

The present disclosure relates to a battery pack, a battery assembly and a vehicle including the same.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at the positive electrode, electricity is produced by movement of electrons released from the metal.

A plurality of secondary batteries may form a battery module. The voltage generated in each of the secondary battery has its limit, but when the plurality of secondary batteries is connected to each other, they may produce high voltage. The plurality of secondary batteries may form the battery module, and the secondary batteries in the formed battery module may be controlled to keep the voltage constant by a Battery Management System (BMS). A plurality of battery modules may form a battery pack, and the formed battery pack may include a cooler to manage the temperature of the battery modules.

The battery pack may be mounted on a device that requires electricity. For example, the battery pack may be mounted on a vehicle. When the battery pack is mounted on the vehicle, in view of the weight of the battery pack, the battery pack may be disposed at a lower location than the other components of the vehicle to lower the center of gravity of the vehicle. Accordingly, the battery pack may be disposed adjacent to a location at which a user's foot is placed. The battery pack disposed at the location at which the user's foot is placed may be subjected to shock when the user hits with his/her foot, and when the shock is applied to the battery pack, malfunction or failure may occur in the battery pack.

### SUMMARY

### TECHNICAL PROBLEM

The present disclosure is designed to solve the above-described problems, and therefore the present disclosure is directed to providing a battery pack including a pack case having high shock resistance.

The present disclosure is further directed to providing a battery pack for providing a pack case having high shock resistance, and achieving fast fluid venting from a secondary battery in the event of thermal runaway.

The present disclosure is further directed to providing a battery pack that is easy to release heat generated from a secondary battery to prevent thermal runaway in the secondary battery.

Further, the aforementioned objective of the battery pack of the present disclosure may be equally applied to a battery assembly that is the concept including a battery pack and a battery module.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A battery assembly according to an embodiment of the present disclosure includes a secondary battery, a middle case configured to accommodate the secondary battery, the middle case including a top plate, a bottom plate spaced apart from the top plate to form a battery accommodation space between the bottom plate and the top plate and a middle wall connecting the top plate to the bottom plate to divide the battery accommodation space, and a side case coupled to the top plate and the bottom plate at an outside of the battery accommodation space to cover sides of the battery accommodation space, wherein the middle wall is spaced apart from the secondary battery to form a flow channel in which a fluid moves when the fluid is vented from the secondary battery.

The side case may be coupled to the secondary battery by an adhesive.

The side case may include a metal material to conduct heat. A thickness of the adhesive may be smaller than a thickness of the side case.

A thickness of the adhesive may be 0.3 mm or less.

The adhesive may have a thermosetting property.

The battery assembly may further include a module case configured to accommodate the secondary battery, and located in the battery accommodation space, wherein the module case has a module hole at a location corresponding to the secondary battery to allow the fluid to move toward the flow channel when the fluid is vented from the secondary battery.

The secondary battery may have a cylindrical shape, and include a positive protruding portion at one end and a negative surface at an opposite end, and the negative surface and the module case may be adhered to the side case.

The battery assembly may further include a venting valve which is open to allow the fluid moving along the flow channel to move to outside based on a pressure difference between the fluid in the battery accommodation space and the outside being equal to or greater than a predetermined pressure.

The venting valve may include a membrane of which permeability changes to allow the fluid to pass through the membrane based on the pressure difference between the fluid and the outside being equal to or greater than the predetermined pressure.

The venting valve may be located in a gravity direction.

The battery accommodation space may be divided into a first battery accommodation space and a second battery accommodation space by the middle wall, and the venting valve may include a first venting valve corresponding to the first battery accommodation space, and a second venting valve corresponding to the second battery accommodation space.

The middle case may be integrally formed. The side case may be coupled to the top plate and the bottom plate by bolts.

The battery assembly may further include a cover case coupled to the middle case to cover other sides of the battery accommodation space where the side case is not provided.

A vehicle according to an embodiment of the present disclosure includes a vehicle frame, and a battery assembly which forms at least part of a bottom of the vehicle frame, wherein the battery assembly includes a battery module, a middle case configured to accommodate the battery module, the middle case including a top plate, a bottom plate spaced apart from the top plate to form a battery accommodation space between the bottom plate and the top plate and a middle wall connecting the top plate to the bottom plate to divide the battery accommodation space, and a side case coupled to the top plate and the bottom plate at an outside of the battery accommodation space to cover sides of the battery accommodation space, and wherein the middle wall is spaced apart from the battery module to form a flow channel in which a fluid moves when the fluid is vented from the battery module.

The side case may be coupled to the battery module by an adhesive.

The side case may include a metal material to conduct heat.

The vehicle may further include a venting valve which is open to allow the fluid moving along the flow channel to move to outside based on a pressure difference between the fluid in the battery accommodation space and the outside being equal to or greater than a predetermined pressure.

A battery pack according to an embodiment of the present disclosure includes a battery module including a secondary battery, a middle case configured to accommodate the battery module, the middle case including a top plate, a bottom plate spaced apart from the top plate to form a battery accommodation space between the bottom plate and the top plate and a middle wall connecting the top plate to the bottom plate to divide the battery accommodation space, and a side case coupled to the top plate and the bottom plate at an outside of the battery accommodation space to cover sides of the battery accommodation space and coupled to the secondary battery by an adhesive.

### ADVANTAGEOUS EFFECTS

The battery pack according to the present disclosure may include the middle wall connecting the top plate to the bottom plate to provide the pack case having high resistance to shock.

The battery pack according to the present disclosure may include the middle wall and the battery module spaced apart from each other for fluid venting, thereby achieving fast fluid venting from the secondary battery in the event of thermal runaway.

The battery pack according to the present disclosure may include the secondary battery and the side case joined together by the adhesive, making it easy to release heat generated from the secondary battery, thereby preventing thermal runaway in the secondary battery.

Further, the aforementioned effect of the battery pack of the present disclosure may be equally applied to the battery assembly that is the concept including the battery pack and the battery module.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a side view showing a vehicle including a battery pack according to a first embodiment of the present disclosure.
FIG. 2 is a cross-sectional view of a conventional battery pack.
FIG. 3 is a perspective view of the battery pack shown in FIG. 1.
FIG. 4 is an exploded view of the battery pack shown in FIG. 3.
FIG. 5 is a cross-sectional view of the battery pack shown in FIG. 3, taken along the line V-V'.
FIG. 6 is a conceptual diagram showing fluid movement in the cross-sectional view shown in FIG. 5.
FIG. 7 is a conceptual diagram showing heat movement in the cross-sectional view shown in FIG. 5.
FIG. 8 is a cross-sectional view of a battery pack according to a second embodiment.
FIG. 9 is a cross-sectional view of a battery pack according to a third embodiment.
FIG. 10 is a cross-sectional view of a battery pack according to a fourth embodiment.
FIG. 11 is a cross-sectional view of a battery pack according to a fifth embodiment.
FIG. 12 is a cross-sectional view of a battery pack according to a sixth embodiment.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other element, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and intervening elements may be present.

Meanwhile, the terms "up-down direction", "down", and "front-rear direction" as used herein are defined on the basis of the drawings, and the shape and location of each element is not limited by these terms.

Hereinafter, the embodiments according to the present disclosure will be described in detail with reference to the accompanying drawings.

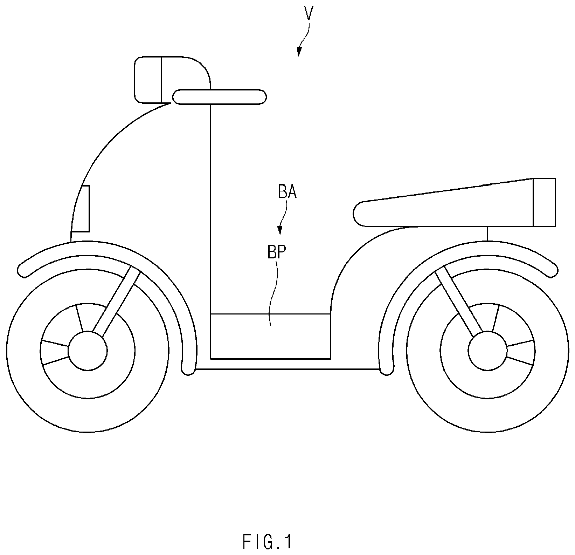

FIG. 1 is a side view showing a vehicle V including a battery pack BP according to a first embodiment of the present disclosure.

The vehicle V according to the first embodiment of the present disclosure will be described with reference to FIG. 1.

The vehicle V requiring electrical energy may be provided. Here, the vehicle V refers to a movable device, and as shown in FIG. 1, may be a motorcycle or a car. However, for convenience of description, the following description is made on the assumption that the vehicle V is a motorcycle as shown in FIG. 1.

The vehicle V may include the battery pack BP configured to produce electrical energy. The battery pack BP may have a predetermined weight, and for stable mounting of the battery pack BP having the weight, the battery pack BP may be mounted on the lower part of the vehicle V. Further, as the battery pack BP is mounted on the lower part of the vehicle V, the battery pack BP may be disposed adjacent to a location at which a user's foot is placed. The user may hit the battery pack BP with his/her foot while using the vehicle V. Accordingly, the battery pack BP may be subjected to shock. When the battery pack BP is subjected to shock, the shock may be transferred to a second battery B included in the battery pack BP, causing side reaction in the secondary battery B, and consequential thermal runaway in the secondary battery B. To prevent this, as opposed to FIG. 1, the battery pack BP may be located in a lower frame of the vehicle V. However, any element or structure may be needed to make the battery pack BP possess sufficient rigidity or to prevent damage to the battery pack BP. Because the addition of any element may involve the increased production time or cost, the battery pack BP needs to have rigidity without an addition of any other element. Further, the battery pack BP acts as a toehold of the vehicle V as shown in FIG. 1, so there is a need to increase the rigidity of the battery pack BP. That is, when the battery pack BP forms at least part of the vehicle frame bottom of the vehicle V, the battery pack BP having the increased rigidity may be necessary.

In addition, a battery assembly BA may include the battery pack BP and a battery module BM as described below. The battery assembly BA may include the secondary battery B, and include necessary components for the proper operation of the secondary battery B. The secondary battery B may be provided in the form of the battery module BM, or the battery pack BP including a plurality of battery modules BM. Further, the battery pack BP may be provided without forming the battery module BM. Providing the secondary battery B by forming a module may ensure structural stability, but because of including a larger number of elements, a longer production time and a higher production cost may be required. Accordingly, a user or a manufacturer of the secondary battery B may provide the secondary battery B in the proper form for his/her needs. It may be understood that the battery assembly BA refers collectively to the concept of providing this form of secondary battery B. Accordingly, what is described as the battery module BM below may be understood as the battery assembly BA, and when the battery pack BP does not include the battery module BM and is directly formed from the secondary battery B, the battery pack BP in the following description may be understood as the secondary battery B.

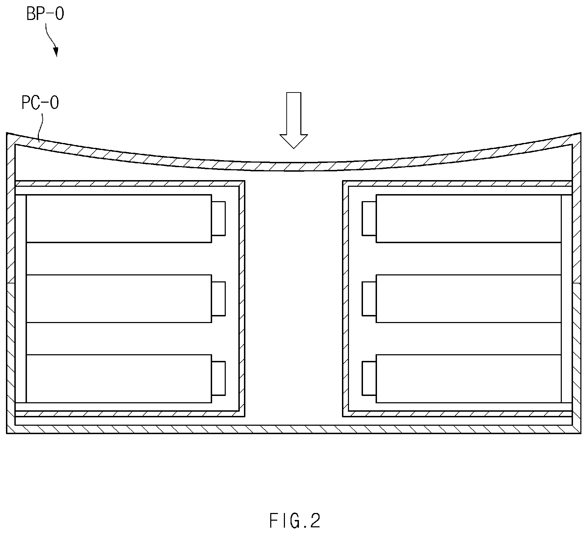

FIG. 2 is a cross-sectional view of the conventional battery pack BP-0.

The conventional battery pack BP-0 will be described with reference to FIG. 2.

The battery pack BP-0 may include a pack case PC-0 accommodating the battery module BM. The pack case PC-0 of the conventional battery pack BP-0 includes two parts which are assembled together. The pack case PC-0 may include the two parts, the upper part and the lower part, and the battery module BM may be accommodated in between each part of the pack case PC-0. When shock is applied from above the pack case PC-0, deformation occur in the pack case PC-0 as shown in FIG. 2. Because the edge of the upper part of the pack case PC-0 is in contact with the lower part of the pack case PC-0, when shock is applied to the edge of the pack case PC-0, deformation of the pack case PC-0 may be prevented. However, because the central portion of the pack case PC-0 at the inside of the edge of the upper part of the pack case PC-0 is not supported by the lower part of the pack case PC-0, there is no shock-resistant portion, failing to resist the applied shock, so deformation may easily occur. The present disclosure can solve this problem.

Further, the conventional pack case PC-0 does not have a structure for preventing thermal runaway resulting from side reaction in the secondary battery B. Because side reaction may occur in the secondary battery B due to shocks, the present disclosure may need a preventive structure against the situation.

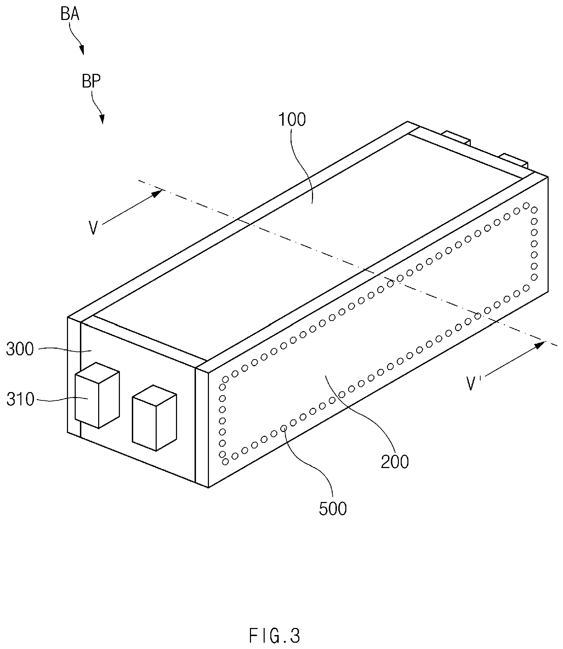

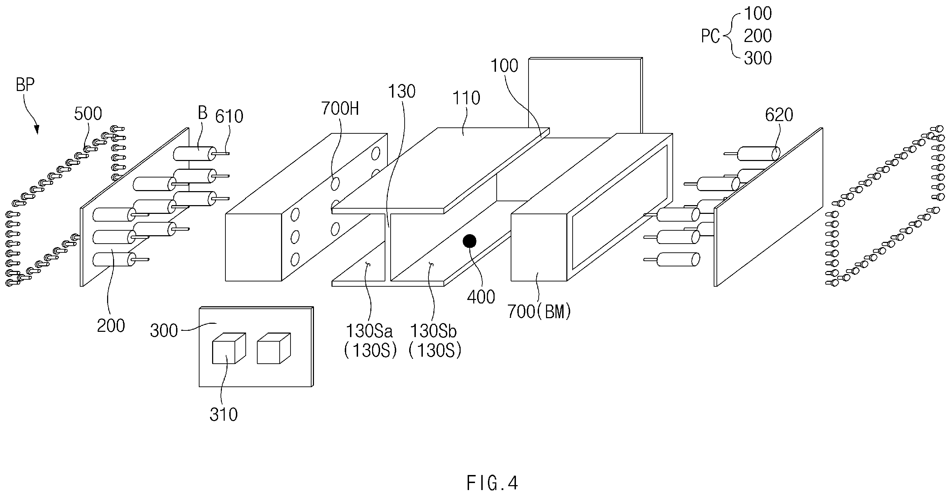

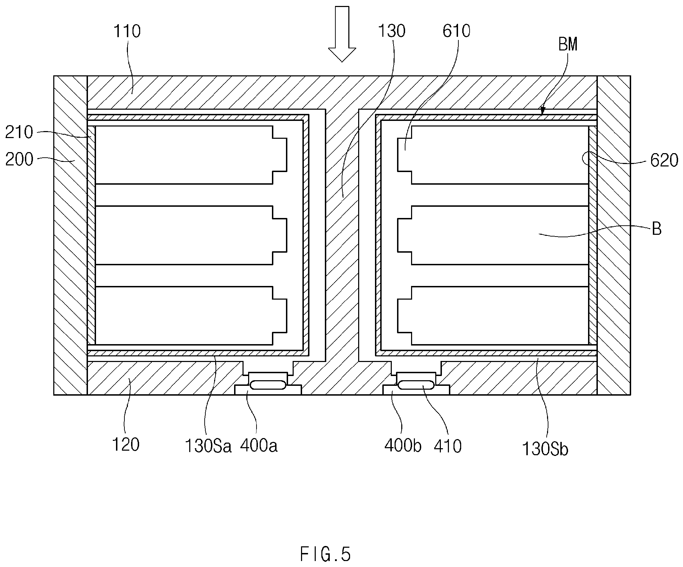

FIG. 3 is a perspective view of the battery pack BP shown in FIG. 1. FIG. 4 is an exploded view of the battery pack BP shown in FIG. 3. FIG. 5 is a cross-sectional view of the battery pack BP shown in FIG. 3, taken along the line V-V'.

The battery pack BP according to the first embodiment of the present disclosure will be described with reference to FIGS. 3 to 5.

As shown in FIG. 4, the battery pack BP may include the secondary battery B configured to produce electricity.

The secondary battery B may produce electricity. The secondary battery B may include an electrode assembly (not shown), and the electrode assembly may include an electrode (not shown) including a current collector (not shown) including a metal material and a slurry (not shown) coated on the current collector. The electrode may include a plurality of electrodes, and the electrode assembly may include a plurality of separators (not shown) between the plurality of electrodes. In this instance, the electrodes may produce electricity, and the separators may prevent the contact between the slurries of the plurality of electrodes. The electrode assembly may include an electrode tab (not shown) extended from the current collector. The plurality of electrode tabs extended from the plurality of current collectors may be connected to an electrode lead (not shown). Accordingly, the electricity produced from the electrodes may move to the electrode lead through the electrode tabs.

The secondary battery B may include a battery case configured to accommodate the electrode assembly. For example, the battery case may be pouch-like, cylindrical or prismatic in shape. For convenience of description, the present disclosure is described on the assumption that the battery case is cylindrical in shape as shown in FIG. 4. However, the present disclosure is not limited thereto.

The secondary battery B may include a positive protruding portion 610 having positive polarity and a negative surface 620 having negative polarity. However, the positive electrode and the negative electrode may have electrical properties in reverse, and for convenience of description, the present disclosure is described on the assumption that the positive protruding portion 610 has positive polarity, and the negative surface 620 has negative polarity.

The secondary battery B may include a plurality of secondary batteries B to form the battery module BM. The battery module BM may be electrically connected to a Battery Management System (BMS), and the BMS may control the plurality of secondary batteries B to maintain the voltage of the plurality of secondary batteries B within a preset range.

The battery module BM may include a module case 700 configured to accommodate the plurality of secondary batteries B. For example, the plurality of secondary batteries B may be arranged in a matrix as shown in FIG. 4, and to accommodate the plurality of secondary batteries B arranged in the matrix, the module case 700 may have an approximately cuboidal shape.

The module case 700 may have an opening at one side. The secondary battery B may be accommodated in the module case 700 through the opening of the module case 700. In other words, by the opening of the module case 700, the negative surface 620 of the secondary battery B may be exposed to the outside of the battery module BM. The opening of the module case 700 may face a side case 200 as described below.

The module case 700 may have a module hole 700H at a location corresponding to the positive protruding portion 610 of the secondary battery B. Through the module hole 700H, the positive protruding portion 610 of each of the plurality of secondary batteries B may be connected to a busbar (not shown). The busbar may be exposed to the outside of the battery module BM to establish an electrical connection between the adjacent battery modules BM. Further, when side reaction occurs in the secondary battery B as described below, the module hole 700H may be a passage through which a fluid, for example, gas generated by the side reaction escapes from the module case 700.

As shown in FIG. 3, the battery pack BP may include a pack case PC configured to accommodate the battery module BM. In other words, the pack case PC may have a battery accommodation space 130S for accommodating the battery module BM. For example, the pack case PC may have an approximately cuboidal shape that conforms to the shape of the battery module BM. There are procedural difficulties in integrally forming the pack case PC, and when integrally forming the pack case PC, it is difficult to accommodate the battery module BM inside, so the pack case PC made up of a plurality of parts may be formed.

A middle case 100 may be configured to cover the upper part and the lower part of the pack case PC. That is, the middle case 100 may include a top plate 110 and a bottom plate 120 spaced apart from the top plate 110 to form a battery accommodation space 130S between the top plate 110 and the bottom plate 120 to accommodate the battery module BM. Further, the middle case 100 may further include a middle wall 130 connecting the top plate 110 to the bottom plate 120 to divide the battery accommodation space 130S.

The middle wall 130 may be located in the middle between the top plate 110 and the bottom plate 120 in the width direction as shown in FIG. 5, but is not limited thereto. Further, the middle wall 130 may be extended in a direction parallel to the length direction of the top plate 110 and the bottom plate 120 as shown in FIG. 4, but is not limited thereto, and may be extended at a predetermined angle to the length direction of the top plate 110 and the bottom plate 120, and further, may be extended in the width direction of the top plate 110 and the bottom plate 120. In addition, the middle wall 130 is not extended in only one direction, and may be variously extended. However, for convenience of description, the description is made on the assumption that the middle wall 130 is located at the center between the top plate 110 and the bottom plate 120 in the width direction, and is extended in the direction parallel to the length direction of the top plate 110 and the bottom plate 120. That is, the middle case 100 may look like a rotated "H" in cross section. The battery accommodation space 130S may be divided into a first battery accommodation space 130Sa and a second battery accommodation space 130Sb by the middle wall 130 as shown in FIG. 4. The first battery accommodation space 130Sa and the second battery accommodation space 130Sb formed by the middle case 100 may be located at the left side and the right side of the middle wall 130, respectively. In this case, the right side of the first battery accommodation space 130Sa may be covered by the middle wall 130, and the upper side and the lower side may be covered by the top plate 110 and the bottom plate 120, respectively. In this case, the left side of the first battery accommodation space 130Sa and the right side of the second battery accommodation space 130Sb may be open with respect to the middle case 100. The middle wall 130 will be described in further detail after the brief description of the battery pack BP.

In addition, the middle case 100 may be integrally formed. It is because integrally forming may be more suitable for improving rigidity.

The battery pack BP may include the side case 200 coupled to the top plate 110 and the bottom plate 120 at the outside of the battery accommodation space 130S to cover the side of the battery accommodation space 130S. The side case 200 may include a plurality of side cases 200 to cover the left side of the first battery accommodation space 130Sa and the right side of the second battery accommodation space 130Sb. In other words, the side case 200 may have a shape that conforms to the shape of the opening at each of the left side and the right side of the middle case 100. The side case 200 may have a plate shape extended in the left-right direction as shown in FIG. 4. Further, the side case 200 may cover the opening of the battery module BM. The module case 700 may have the opening for accommodating the secondary battery B as described above. The side case 200 may cover the opening of the module case 700 to prevent the secondary battery B from moving out of the module case 700.

The side case 200 may be coupled to the middle case 100. More specifically, the side case 200 may be coupled to the top plate 110 and the bottom plate 120 by bolts 500. Accordingly, the side case 200 and the middle case 100 may be strongly coupled. Further, the side case 200 may be also coupled to a cover case 300 as described below by the bolts 500. The side case 200 has a rectangular shape when viewed from the side, and for the strong coupling of the side case 200 and the adjacent component, the bolts 500 may be fastened along the rectangular edge. The top plate 110 and the bottom plate 120 may be disposed corresponding to the upper side and the lower side of the rectangle, and the cover case 300 may be located at both sides corresponding the left side and the right side of the rectangle. In other words, the top plate 110, the bottom plate 120 and/or the cover case 300 may be extended to the cover case 300 so that they are coupled to the side case 200. That is, the top plate 110, the bottom plate 120 and/or the cover case 300 may be extended to the cover case 300 in the left-right direction. In this instance, the width of the module case 700 may be equal to or smaller than the width of the battery accommodation space 130S to prevent a situation where the side case 200 and the top plate 110 and/or the bottom plate 120 are not coupled by the module case 700.

The battery pack BP may further include the cover case 300 coupled to the middle case 100 to cover the other sides of the battery accommodation space 130S where the side case 200 is not provided. More specifically, the cover case 300 may be located at the front side and/or the rear side of the middle case 100 to cover the front side and/or the rear side of the battery accommodation space 130S. Accordingly, as the middle wall 130 and the side case 200 cover the battery module BM from the left side and the right side, the top plate 110 and the bottom plate 120 cover the battery module BM from the upper side and the lower side, and the cover case 300 covers the battery module BM from the front side and the rear side, the battery module BM may be covered in all directions.

In this instance, the cover case 300 may include a connection portion 310 protruded in a direction facing away from the battery accommodation space 130S. The connection portion 310 may be coupled to the other component of the vehicle V.

When the battery pack BP is accommodated in the lower frame of the vehicle V, the lower frame of the vehicle V may support the battery pack BP, but when the battery pack BP acts as a toehold, the battery pack BP may be connected to the surrounding component. The connection portion 310 may be used to connect the component adjacent to the battery pack BP to the battery pack BP.

The configuration of the battery pack BP has been hereinabove described, and it has been described that the pack case PC having high shock resistance may be provided by the present disclosure. Side reaction may occur in the secondary battery B in many cases. The side reaction may refer to an unintended reaction in the secondary battery B. By the side reaction, the temperature of the secondary battery B may increase, causing a fire. The fire in the secondary battery B may propagate to the adjacent secondary battery B, and spread across the entire battery pack BP, causing a fire in the vehicle V. This may threaten the safety of the user, and there is a need to prevent it. Further, when the temperature of the secondary battery B increases, the electrolyte may evaporate. The evaporated electrolyte becomes gas, leading to the increased pressure in the secondary battery B, eventually causing damage to the battery case, and thus the gas may be vented out of the secondary battery B. The evaporated electrolyte may be a mixture of electrolyte in liquid state and electrolyte in gaseous state, and thus it may be referred to as a fluid. The fluid produced from the secondary battery B may cause damage to the pack case PC, and there is a need to release the fluid out of the pack case PC.

Hereinafter, the structure for solving the above-described problem of the present disclosure will be described.

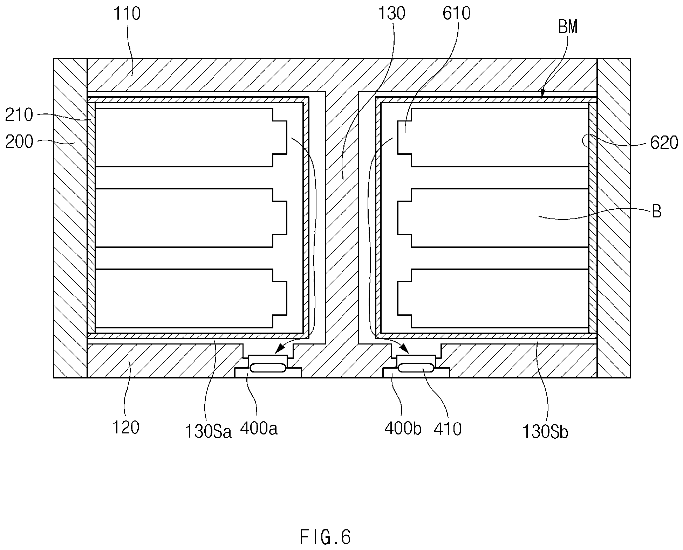

FIG. 6 is a conceptual diagram showing fluid movement in the cross-sectional view shown in FIG. 5.

The other function of the battery pack BP according to the first embodiment of the present disclosure will be described with reference to FIG. 6.

As shown in FIG. 6, when the fluid is vented from the battery module BM, the middle wall 130 of the pack case PC may be spaced apart from the battery module BM to form a flow channel in which the fluid may move. In case where the middle wall 130 contacts the battery module BM, the fluid produced from the battery module BM may not move. When the fluid cannot move, eventually the pressure of the pack case PC may increase, causing damage to the pack case PC. In this instance, the flow channel may refer to a space that is extended along the middle wall 130. The fluid produced from the secondary battery B located at the upper side on the basis of FIG. 6 may move longer along the flow channel, and the fluid produced from the secondary battery B located at the lower side may move shorter along the flow channel.

As described above, when the fluid is vented from the secondary battery B, the module case 700 may have the module hole 700H at a location corresponding to the secondary battery B to allow the fluid to move toward the flow channel. Unless the module hole 700H is formed, the fluid produced from the secondary battery B cannot escape from the battery module BM, leading to the increased pressure of the module case 700, and eventually causing damage to the module case 700. Alternatively, while it moves, the fluid may cause damage to an adhesive 210 between the module case 700 and the side case 200 as described below.

In this instance, the battery pack BP may further include a venting valve 400 that is open to allow the fluid moving along the flow channel to move outwards based on a pressure difference between the fluid in the battery accommodation space 130S and the outside being equal to or greater than a predetermined pressure. The fluid moving along the flow channel may exit the battery pack BP along the venting valve 400. The venting valve 400 is not always open, and may be open in response to the pressure of the battery pack BP being equal to or higher than the predetermined pressure. The predetermined pressure to open the venting valve 400 may be a value corresponding to an increase in internal pressure of the battery pack BP when fluid venting occurs due to side reaction in the secondary battery B.

The venting valve 400 may include a membrane of which permeability changes to allow the fluid to pass through based on the pressure difference between the fluid and the outside being equal to or greater than the predetermined pressure. However, the venting valve 400 may be an umbrella valve structured to open and/or close based on the pressure difference, but is not limited thereto.

The venting valve 400 may be located adjacent to the flow channel. Moving the fluid from the flow channel directly to the venting valve 400 is a method that can reduce the friction induced loss, compared to moving the fluid to a different location.

The venting valve 400 may be located in the gravity direction. When the battery pack BP is mounted on the lower part of the vehicle V, in case where the venting valve 400 is located at the upper side, the vented fluid may be directed towards the user. To prevent it, the venting valve 400 may be located in the gravity direction. When the fluid moves in the gravity direction, the fluid may move to the lower part of the vehicle V.

In other words, the fluid may move out of the battery pack BP through the venting valve 400 along the flow channel. By the flow of the fluid, diffusion of the fluid into the battery accommodation space 130S may be prevented. In case where the fluid diffuses into the battery accommodation space 130S, the other secondary battery B may be affected, and malfunction or failure may occur in the other secondary battery B.

As mentioned above, the battery accommodation space 130S may be divided into the first battery accommodation space 130Sa and the second battery accommodation space 130Sb by the middle wall 130. The venting valve 400 may include a first venting valve 400a corresponding to the first battery accommodation space 130Sa and a second venting valve 400b corresponding to the second battery accommodation space 130Sb. As the battery accommodation space 130S may be divided by the middle wall 130, the venting valve 400 corresponding to each battery accommodation space 130S may be provided for fluid venting in each battery accommodation space 130S. However, as shown in FIG. 6, the present disclosure may encompass the case where each battery accommodation space 130S corresponds to one venting valve 400 as well as the case where each battery accommodation space 130S corresponds to multiple venting valves 400.

In this instance, in addition, the top plate 110 and/or the bottom plate 120 may contact the battery module BM as opposed to FIG. 6. In this case, it may minimize the empty space to increase the energy density per unit volume. However, the top plate 110 and/or the bottom plate 120 may be spaced apart from the battery module BM as shown in FIG. 6. In this case, a space for preventing the rapid rise in pressure may be formed to prevent damage to the battery pack BP by the sudden fluid venting in the event of side reaction in the secondary battery B.

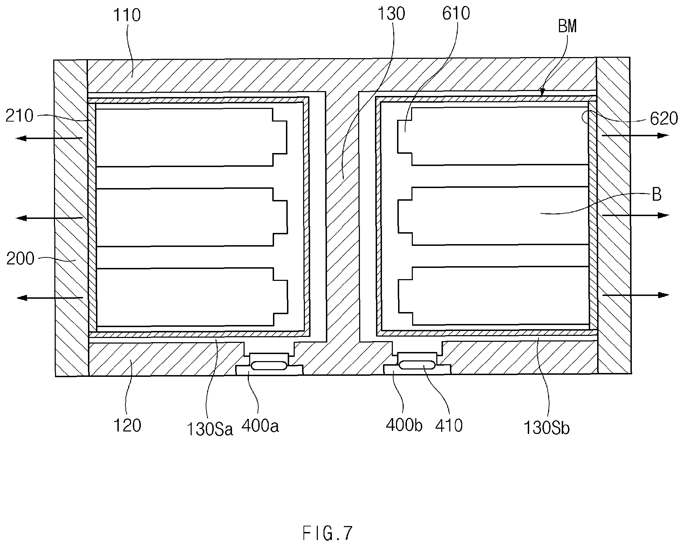

FIG. 7 is a conceptual diagram showing heat movement in the cross-sectional view shown in FIG. 5.

The other function of the battery pack BP according to the first embodiment of the present disclosure will be described with reference to FIG. 7.

The battery module BM may include the secondary battery B, and the side case 200 may be coupled to the secondary battery B by the adhesive 210. That is, the secondary battery B may be directly coupled to the side case 200 by the adhesive 210. The secondary battery B may contact the side case 200. Accordingly, heat generated from the secondary battery B may be directly transferred to the side case 200. In particular, in the event of thermal runaway in the secondary battery B, heat generated from the secondary battery B may be directly released to the outside through the side case 200, thereby retarding heating timing. Alternatively, it may be possible to prevent the secondary battery B from reaching the temperature at which side reaction occurs. The heat dissipation may represent that thermal management of the secondary battery B is made easy.

As mentioned above, the secondary battery B may have a cylindrical shape, and include the positive protruding portion 610 at one end and the negative surface 620 at the other end. In this instance, the negative surface 620 and the module case 700 may be adhered to the side case 200. When the negative surface 620 is adhered to the side case 200, the secondary battery B may contact the side case 200 over a wider area than when the positive protruding portion 610 is protruded toward the side case 200, and thus it may be more effective in releasing the heat.

The side case 200 may include a metal material to conduct heat.

The thickness of the adhesive 210 may be smaller than the thickness of the side case 200. Because the heat transfer rate increases as the distance the heat must travel decreases, the thickness of the adhesive 210 may be small.

The thickness of the adhesive 210 may be 0.3 mm or less. When the thickness of the adhesive 210 is too small, it may be difficult to attach the secondary battery B to the side case 200. Accordingly, the adhesive 210 is not so thick, but may be thick enough to attach the secondary battery B to the side case 200.

The adhesive 210 may have a thermosetting property. The secondary battery B may generate heat while producing electricity. When the adhesive 210 is a thermosetting adhesive, the adhesive 210 may have the thermosetting property to adhere the secondary battery B to the side case 200 all the time during the operation of the secondary battery B.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

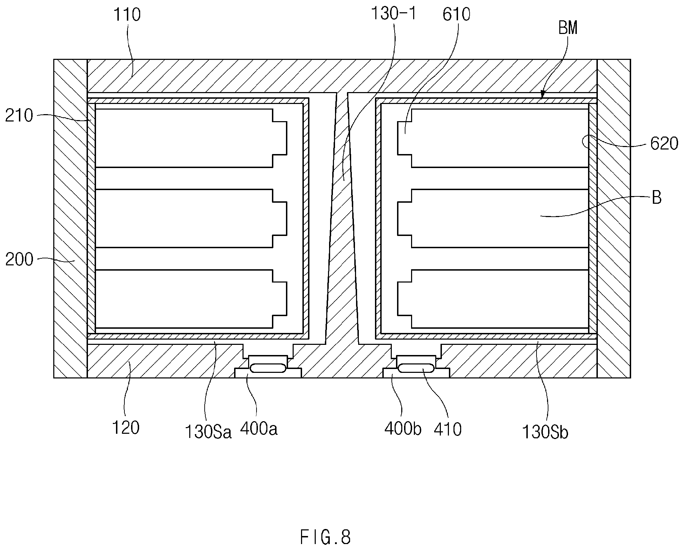

FIG. 8 is a cross-sectional view of the battery pack BP according to the second embodiment of the present disclosure.

The middle wall 130 according to the second embodiment of the present disclosure will be described with reference to FIG. 8.

The second embodiment is different from the first embodiment in that the shape of the middle wall 130 is different.

The middle wall 130 may increase in thickness as it goes toward the gravity direction. The thicker side of the middle wall 130 has a stronger coupling strength, and is more resistant to shocks. Further, as the venting valve 400 may be located close to the gravity direction side of the middle wall 130, the cross sectional area of the flow channel adjacent to the venting valve 400 may decrease and the speed of the fluid at the flow channel adjacent to the venting valve 400 may increase.

### Third embodiment

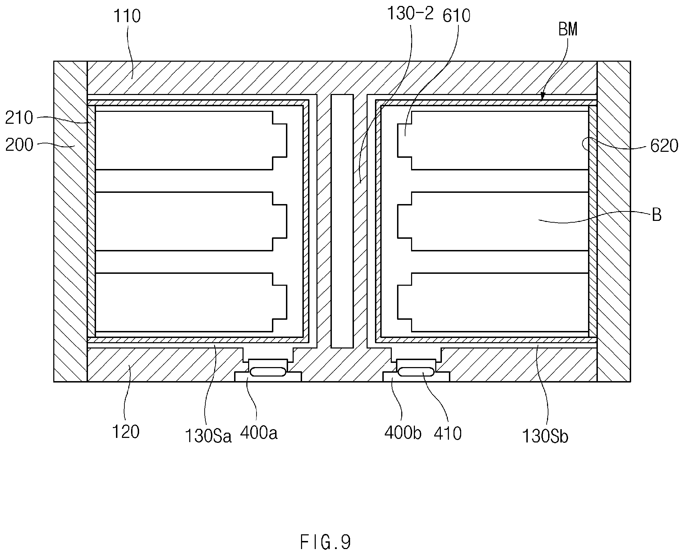

FIG. 9 is a cross-sectional view of the battery pack BP according to the third embodiment of the present disclosure.

The middle wall 130-2 according to the third embodiment of the present disclosure will be described with reference to FIG. 9.

The third embodiment is different from the first embodiment in that the number of middle walls 130-2 is different.

The middle wall 130-2 may include a plurality of middle walls 130-2. The middle wall 130-2 may include two middle walls 130-2 as shown in FIG. 9. The two middle walls 130-2 may be extended such that the extension directions are parallel to each other.

### Fourth embodiment

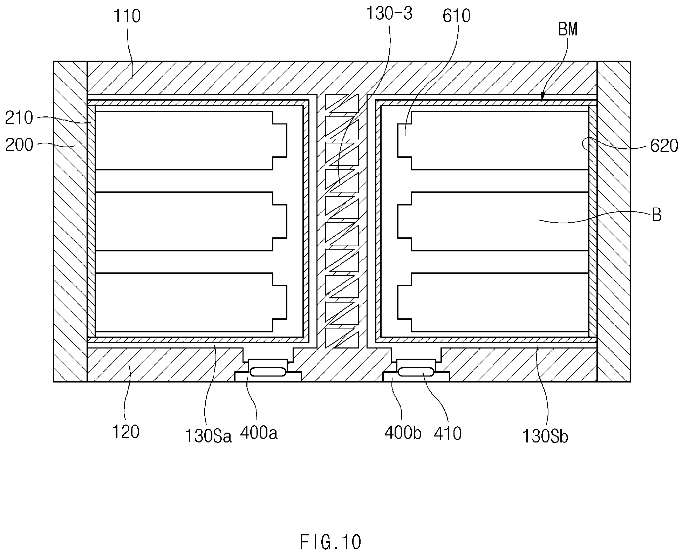

FIG. 10 is a cross-sectional view of the battery pack BP according to the fourth embodiment of the present disclosure.

The middle wall 130-3 according to the fourth embodiment of the present disclosure will be described with reference to FIG. 10.

The fourth embodiment is different from the first embodiment in that the shape of the middle wall 130-3 is different.

The middle wall 130-3 may have a truss structure. The middle wall 130-3 having the truss structure may have sufficient rigidity and be light weight. Further, the middle wall 130-3 of the truss structure may reduce the use of materials and reduce the production cost.

### Fifth embodiment

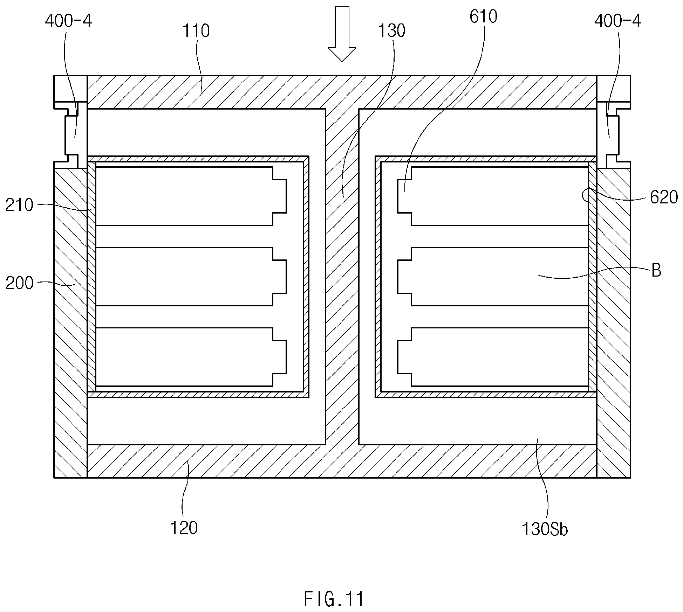

FIG. 11 is a cross-sectional view of the battery pack BP according to the fifth embodiment of the present disclosure.

The venting valve 400-4 according to the fifth embodiment of the present disclosure will be described with reference to FIG. 11.

The fifth embodiment is different from the first embodiment in that the location of the venting valve 400-4 is different.

The venting valve 400-4 may be located at the opposite sides of the secondary battery B in the gravity direction. Further, the venting valve 400-4 may be mounted on the side case 200. In this case, the fifth embodiment is different from the first embodiment in the movement direction of the flow. Although the fluid moves upwards, because the venting valve 400-4 is mounted on the side case 200, the fluid escaping from the venting valve 400-4 is released to the left or right, not upwards, so the fluid may not be directed towards the user.

### Sixth embodiment

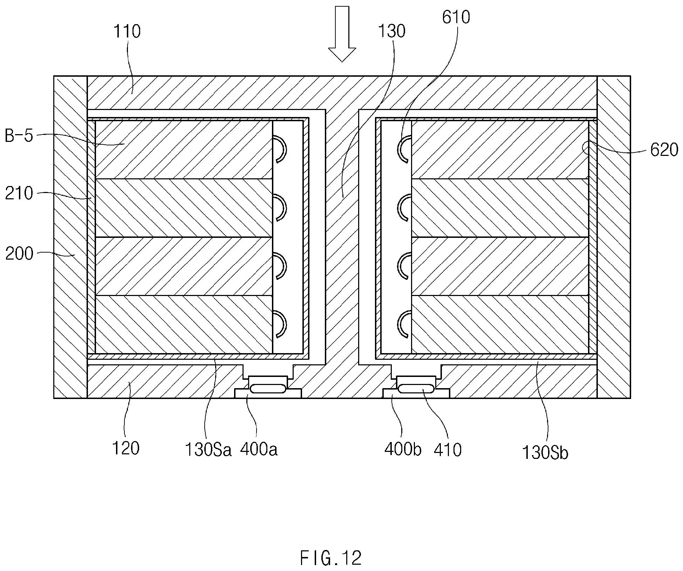

FIG. 12 is a cross-sectional view of the battery pack BP according to the sixth embodiment of the present disclosure.

The battery pack BP according to the sixth embodiment of the present disclosure will be described with reference to FIG. 12.

The sixth embodiment is different from the fifth embodiment in that the type of the secondary battery B-5 is different.

The secondary battery B-5 may be a pouch type. The pouch-type secondary battery B-5 may be located such that a folded part of the side portion faces the middle wall 130, and a flat part opposite the folded part contacts the side case 200. Also, in the case of the pouch-type secondary battery B-5, sealing of the folded part of the side portion may be more likely to be unsealed than the other area, and thus when side reaction occurs in the secondary battery B-5, the fluid vented from the secondary battery B-5 may come out of the flow channel through the folded part of the side portion.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

V: Vehicle
BP: Battery pack
PC: Pack case
100: Middle case
110: Top plate
120: Bottom plate
130: Middle wall
130S: Battery accommodation space
130Sa: First battery accommodation space
130Sb: Second battery accommodation space
200: Side case
210: Adhesive
300: Cover case
310: Connection portion
400: Venting valve
400a: First venting valve
400b: Second venting valve
500: Bolt
B: Secondary battery
610: Positive protruding portion
620: Negative surface
BM: Battery module
700: Module case
700H: Module hole

## Claims

1. A battery assembly comprising:
a secondary battery;
a middle case configured to accommodate the secondary battery, the middle case including a top plate, a bottom plate spaced apart from the top plate to form a battery accommodation space between the bottom plate and the top plate and a middle wall connecting the top plate to the bottom plate to divide the battery accommodation space; and
a side case coupled to the top plate and the bottom plate at an outside of the battery accommodation space to cover sides of the battery accommodation space,
wherein the middle wall is spaced apart from the secondary battery to form a flow channel in which a fluid moves when the fluid is vented from the secondary battery.

2. The battery assembly according to claim 1,
wherein the side case is coupled to the secondary battery by an adhesive.

3. The battery assembly according to claim 1,
wherein the side case includes a metal material to conduct heat.

4. The battery assembly according to claim 2,
wherein a thickness of the adhesive is smaller than a thickness of the side case.

5. The battery assembly according to claim 2,
wherein a thickness of the adhesive is 0.3 mm or less.

6. The battery assembly according to claim 2,
wherein the adhesive has a thermosetting property.

7. The battery assembly according to claim 2, further comprising:
a module case configured to accommodate the secondary battery, and located in the battery accommodation space,
wherein the module case has a module hole at a location corresponding to the secondary battery to allow the fluid to move toward the flow channel when the fluid is vented from the secondary battery.

8. The battery assembly according to claim 7,
wherein the secondary battery has a cylindrical shape, and includes a positive protruding portion at one end and a negative surface at an opposite end, and
wherein the negative surface and the module case are adhered to the side case.

9. The battery assembly according to claim 1, further comprising:
a venting valve which is open to allow the fluid moving along the flow channel to move to outside based on a pressure difference between the fluid in the battery accommodation space and the outside being equal to or greater than a predetermined pressure.

10. The battery assembly according to claim 9,
wherein the venting valve includes a membrane of which permeability changes to allow the fluid to pass through the membrane based on the pressure difference between the fluid and the outside being equal to or greater than the predetermined pressure.

11. The battery assembly according to claim 9,
wherein the venting valve is located in a gravity direction.

12. The battery assembly according to claim 9,
wherein the battery accommodation space is divided into a first battery accommodation space and a second battery accommodation space by the middle wall, and
wherein the venting valve includes:
a first venting valve corresponding to the first battery accommodation space; and
a second venting valve corresponding to the second battery accommodation space.

13. The battery assembly according to claim 1,
wherein the middle case is integrally formed.

14. The battery assembly according to claim 1,
wherein the side case is coupled to the top plate and the bottom plate by bolts.

15. The battery assembly according to claim 1, further comprising:
a cover case coupled to the middle case to cover other sides of the battery accommodation space where the side case is not provided.

16. A vehicle comprising:
a vehicle frame; and
a battery assembly which forms at least part of a bottom of the vehicle frame,
wherein the battery pack includes:
a battery module;
a middle case configured to accommodate the battery module, the middle case including a top plate, a bottom plate spaced apart from the top plate to form a battery accommodation space between the bottom plate and the top plate and a middle wall connecting the top plate to the bottom plate to divide the battery accommodation space; and
a side case coupled to the top plate and the bottom plate at an outside of the battery accommodation space to cover sides of the battery accommodation space, and
wherein the middle wall is spaced apart from the battery module to form a flow channel in which a fluid moves when the fluid is vented from the battery module.

17. The vehicle according to claim 16,
wherein the side case is coupled to the battery module by an adhesive.

18. The vehicle according to claim 16,
wherein the side case includes a metal material to conduct heat.

19. The vehicle according to claim 16, further comprising:
a venting valve which is open to allow the fluid moving along the flow channel to move to atmosphere based on a pressure difference between the fluid in the battery accommodation space and the atmosphere being equal to or greater than a predetermined pressure.

20. A battery pack comprising:
a battery module including a secondary battery;
a middle case configured to accommodate the battery module, the middle case including a top plate, a bottom plate spaced apart from the top plate to form a battery accommodation space between the bottom plate and the top plate and a middle wall connecting the top plate to the bottom plate to divide the battery accommodation space; and
a side case coupled to the top plate and the bottom plate at an outside of the battery accommodation space to cover sides of the battery accommodation space and coupled to the secondary battery by an adhesive.
